(19) Europäisches Patentamt
European Patent Office
Office européen des brevets

(11) **EP 3 560 719 A1**

(12) **EUROPÄISCHE PATENTANMELDUNG**

(43) Veröffentlichungstag:
**30.10.2019 Patentblatt 2019/44**

(51) Int Cl.:
**B41J 2/175** (2006.01) **B41J 29/393** (2006.01)
**G01M 3/28** (2006.01)

(21) Anmeldenummer: **19168067.7**

(22) Anmeldetag: **09.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.04.2018 DE 102018206464**

(71) Anmelder: **Heidelberger Druckmaschinen AG 69115 Heidelberg (DE)**

(72) Erfinder:
• **Fischer, Jörg-Achim 24235 Laboe (DE)**
• **Schoepke, Michael 24223 Schwentinental (DE)**
• **Schnabel, Burghart 24147 Kiel (DE)**

(54) **VERFAHREN ZUM ÜBERPRÜFEN EINER LEITUNG FÜR TINTE EINER TINTENDRUCKMASCHINE AUF EINE STÖRUNG**

(57) Ein erfindungsgemäßes Verfahren ist ein Verfahren zum Überprüfen einer Leitung für Tinte einer Tintendruckmaschine auf eine Störung, wobei eine Pumpe (9) für die Tinte derart angesteuert wird, dass die Pumpe einen Druckpuls (24) in der Tinte erzeugt, der Druckpuls durch die Leitung (7) läuft und dabei störungsabhängig beeinflusst wird, der beeinflusste Druckpuls (25) zu einem von der Pumpe beabstandeten Drucksensor (17, 18) gelangt, der Drucksensor ein vom beeinflussten Druckpuls abhängiges Messergebnis (26, D, E) erzeugt und dieses an einen Rechner (20) übermittelt und der Rechner das Messergebnis auswertet (F) und dadurch das Vorhandensein der Störung oder das Vorhandensein und die Art der Störung ermittelt. Die Erfindung ermöglicht es, Störungen einer Leitung für Tinte einer Tintendruckmaschine zu überprüfen bzw. zu erkennen und dabei insbesondere keinen - weitere Störungen hervorrufenden - Überdruck in der Leitung aufzubauen.

Fig.1

**Beschreibung**

Die Erfindung betrifft ein Verfahren mit den Merkmalen von Anspruch 1.

Technisches Gebiet und Stand der Technik

Die Erfindung liegt auf dem technischen Gebiet der grafischen Industrie und dort insbesondere im Bereich des industriellen Tintendrucks (Inkjet) auf flache Substrate, d.h. des Auftragens von flüssiger Tinte auf bogen- oder bahnförmige Bedruckstoffe, bevorzugt aus Papier, Karton, Pappe, Kunststoff oder Verbundmaterial.

In Tintendruckmaschinen wird eine flüssige Tinte unter Einsatz eines Tintendruckkopfs oder mehrerer Tintendruckköpfe in Form von Tropfen auf einen Bedruckstoff übertragen. Solche Tintendruckmaschinen umfassen üblicherweise eine Einrichtung zur Tintenversorgung der Tintendruckköpfe. Solche Einrichtungen wiederum können Störungen aufweisen, welche sich negativ auf das Drucken mit den Tintendruckköpfen auswirken. Beispielsweise kann in einer Tintenleitung der Einrichtung zur Tintenversorgung ein Leck vorhanden sein, so dass Tinte ungewollt austritt und der Druck in der flüssigen Tinte unter einen tolerierbaren Minimalwert abfällt.

Die US 5,439,355 offenbart ein Verfahren und eine Vorrichtung zum Überprüfen einer Ventil-Leckage in einer Pumpenanordnung. Die Anordnung umfasst ein Eingangsventil, eine Pumpenkammer, ein Ausgangsventil und einen Drucksensor. Mit den in der Anordnung vorhandenen Ventilen werden Druckpulse erzeugt, welche von dem Drucksensor erfasst werden. Ventil-Leckagen werden somit über Druckpulse der Ventile überprüft.

Aus der DE 10 2009 048 690 A1 ist ein Verfahren zum Betreiben, insbesondere Reinigen eines Systems zum Beschichten von Bedruckstoffen mit Beschichtungsfluiden bekannt. Dabei kann geprüft werden, ob ein Kurzschließen von Zuführeinrichtungen korrekt erfolgt ist, indem mittels einer Pumpe ein Unterdruck erzeugt wird und letzterer mittels eines Sensors überwacht wird. Die zu überprüfende Stelle sitzt dabei nicht zwischen der Pumpe und dem Sensor.

Im Stand der Technik kann das Problem auftreten, dass Störungen an einer Einrichtung zur Tintenversorgung zu Störungen beim Drucken führen. Es kann weiterhin das Problem auftreten, dass beim Überprüfen auf das Vorhandensein einer Störung ein Überdruck in einer Leitung der Einrichtung zur Tintenversorgung aufgebaut wird. Ein solcher Überdruck kann Bauteile der Einrichtung beschädigen oder kann zu ungewolltem Austreten von Tinte an den Tintendruckköpfen führen.

Es ist daher eine Aufgabe der Erfindung, ein gegenüber dem Stand der Technik verbessertes Verfahren zu schaffen, welches es insbesondere ermöglicht, Störungen einer Leitung für Tinte einer Tintendruckmaschine zu überprüfen bzw. zu erkennen, und dabei insbesondere keinen - weitere Störungen hervorrufenden - Überdruck in der Leitung aufzubauen.

Erfindungsgemäße Lösung

Diese Aufgabe wird erfindungsgemäß durch ein Verfahren mit den Merkmalen von Anspruch 1 gelöst. Vorteilhafte und daher bevorzugte Weiterbildungen der Erfindung ergeben sich aus den Unteransprüchen sowie aus der Beschreibung und den Zeichnungen. Die Merkmale der Erfindung, der Weiterbildungen der Erfindung und der Ausführungsbeispiele zur Erfindung stellen auch in Kombination miteinander vorteilhafte Weiterbildungen der Erfindung dar.

Ein erfindungsgemäßes Verfahren ist ein Verfahren zum Überprüfen einer Leitung für Tinte einer Tintendruckmaschine auf eine Störung, wobei eine Pumpe für die Tinte derart angesteuert wird, dass die Pumpe einen Druckpuls in der Tinte erzeugt, der Druckpuls durch die Leitung läuft und dabei störungsabhängig beeinflusst wird, der beeinflusste Druckpuls zu einem von der Pumpe beabstandeten Drucksensor gelangt, der Drucksensor ein vom beeinflussten Druckpuls abhängiges Messergebnis erzeugt und dieses an einen Rechner übermittelt und der Rechner das Messergebnis auswertet und dadurch das Vorhandensein der Störung oder das Vorhandensein und die Art der Störung ermittelt.

Die Erfindung ermöglicht in vorteilhafter Weise das Überprüfen bzw. Erkennen einer Störung einer Leitung für Tinte einer Tintendruckmaschine und ermöglicht weiterhin insbesondere das Vermeiden eines unerwünschten Überdrucks in der Leitung infolge des Überprüfens. Der erfindungsgemäß verwendete Druckpuls ist insofern kein störender Druckpuls. Auf das Vorsehen eines schützenden, jedoch Bauraum beanspruchenden und Zusatzkosten verursachenden Überdruckventils in der Leitung kann daher ggf. verzichtet werden. Weitere Nachteile eines Überdruckventils sind: potentielle Leckage, benötigte Rückflussleitung, Erhöhung des hydraulischen Widerstands, Erfordernis der Justage, mögliche Leistungsreduktion der Pumpe, Senkung/Begrenzung des Maximaldrucks, Reduktion des Volumenflusses und/oder Verhindern eines hohen, positiven Meniskusdruck am Druckkopf in einer zirkulierenden Tintenversorgung. Auf ein Überdruckventil verzichten zu können, ist erkennbar mit einer Reihe von Vorteil verbunden.

Erfindungsgemäß wird der Pfad entlang der Leitung zwischen Pumpe und Drucksensor auf Fehler bzw. Störungen überprüft, insbesondere auf Leckagen, Fehlanschlüsse oder defekte Komponenten.

Als Ergebnisse der Prüfung können erzielt werden: korrekter Pfad (Leitung ist richtig angeschlossen), inkorrekter Pfad (Leitung ist falsch angeschlossen bzw. vertauscht), inkorrekter Pfad (Leitung ist nicht vorhanden oder zu 100% blockiert) und/oder inkorrekter Pfad (Leitung hat wenigstens ein Leck). Diese Ergebnisse können dem Bedienpersonal ggf. verbunden mit einer Warnung (optisch, akustisch, taktil) angezeigt werden.

Der Druckpuls in der Leitung kann mit einer Vorlaufpumpe ("supply pump") oder mit einer Rücklaufpumpe ("return pump") erzeugt werden, im letzteren Fall als Saugpuls. Um einen störenden Überdruck zu verhindern, kann ein weiterer (dritter) Drucksensor an der Pumpe oder nahe bei der Pumpe vorgesehen sein. Dessen Messergebnisse können benutzt werden, um rechnergestützt die Pumpenleistung zu reduzieren. Um einen störenden Überdruck zu verhindern, kann auch eine Strombegrenzung oder eine Spannungsbegrenzung bei der Steuerung der Pumpe vorgesehen sein.

Weiterbildungen der Erfindung

Bevorzugte Weiterbildungen der Erfindung können sich wie folgt auszeichnen:

- Der Druckpuls kann ein vorgegebener Druckpuls sein;
- Der vorgegebene Druckpuls kann in einem digitalen Speicher abgelegt sein;
- Der Druckpuls kann durch Steuerung der Pumpenleistung, insbesondere der Drehzahl, und/oder der Pumpdauer der Pumpe erzeugt werden;
- Der Druckpuls kann derart bemessen sein, dass ein unbeabsichtigtes Austreten von Tinte an einem Tintendruckkopf der Tintendruckmaschine verhindert wird;
- Es kann ein weiterer Druckpuls erzeugt werden, sofern der Druckpuls einen vorgegebenen Mindestdruck nicht erreicht;
- Der weitere Druckpuls kann intensiver als der Druckpuls sein, insbesondere schneller ansteigen und/oder höher ansteigen und/oder länger andauern;
- Es können mehrere weitere Druckpulse erzeugt werden, wobei deren Anzahl auf einen vorgegebenen Wert begrenzt ist; Beispiel: Wird ein Mindestdruck auch nach der n-ten (z.B. lOten) Wiederholung nicht erreicht, wird das die Leitung als fehlerhaft bestimmt;
- Ein weiterer, von der Pumpe beabstandeter (zweiter) Drucksensor kann bereitgestellt werden und eine Zeitdifferenz des (ersten) Messergebnisses des (ersten) Drucksensors und eines weiteren (zweiten) Messergebnisses des weiteren (zweiten) Drucksensors kann rechnergestützt ermittelt und ausgewertet werden;
- Ein zeitlicher Verlauf des Messergebnisses, insbesondere dessen Gradienten, kann rechnergestützt ausgewertet werden;
- Es kann rechnergestützt ermittelt werden, ob eine der folgenden Störungen vorliegt: Leckage der Leitung, Anschlussfehler der Leitung, Schaltfehler eines Ventils, fehlerhafte Komponente, insbesondere fehlerhafter Dämpfer, Entgaser, Heizer und/oder Filter.

Figuren und Ausführungsbeispiele zur Erfindung

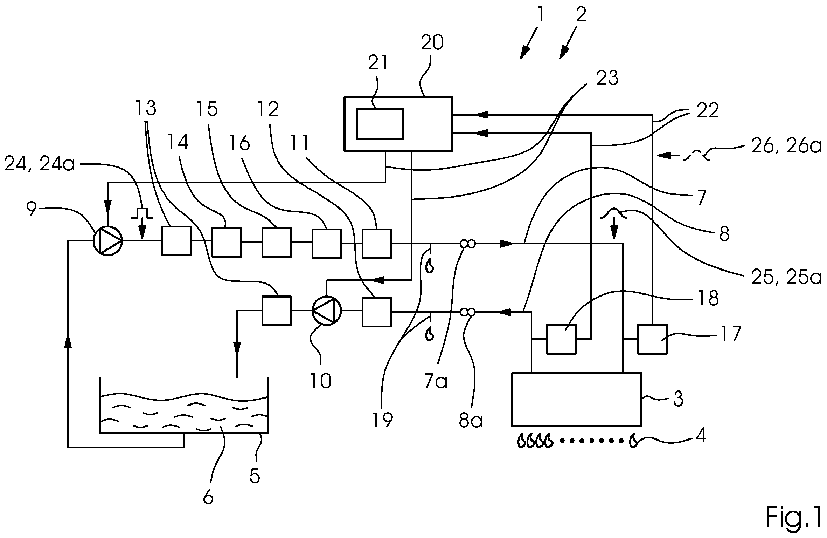

Die Erfindung und deren bevorzugte Weiterbildungen werden nachfolgend unter Bezug auf die Zeichnungen, d.h. die Figuren 1 bis 3, anhand eines bevorzugten Ausführungsbeispiels näher beschrieben. Einander entsprechende Merkmale sind dabei mit denselben Bezugszeichen versehen. Die Figuren 1 bis 3 zeigen Darstellungen des bevorzugten Ausführungsbeispiels des erfindungsgemäßen Verfahrens.

Figur 1 zeigt in schematischer Darstellung eine Tintendruckmaschine 1 bei der Durchführung einer bevorzugten Ausführungsform des erfindungsgemäßen Verfahrens. Die Maschine umfasst eine Einrichtung zur Tintenversorgung 2, welche einen Tintendruckkopf 3 (oder mehrere Tintendruckköpfe) mit flüssiger Farbe versorgt, so dass dieser die Tinte als Tropfen 4 einem Druckbild entsprechend ausstoßen kann. Es wird bevorzugt Papier, Karton oder Kunststofffolie in Bogen- oder Bahnform oder als Etiketten bedruckt. Es können alternativ auch Objekte bzw. deren 3D-Oberfäche bedruckt werden.

Die Einrichtung 2 umfasst einen Tintenvorratsbehälter 5, in dem die Tinte 6 bevorratet ist. Die Tinte gelangt über eine Leitung 7, insbesondere eine Zulaufleitung, zum Tintendruckkopf 3 und über eine weitere Leitung 8, insbesondere eine Rücklaufleitung, zurück zum Tintenvorratsbehälter. Insofern ist die Einrichtung 2 eine Einrichtung zur zirkulierenden Tintenversorgung. Die Einrichtung kann z.B. entsprechend der Vorrichtung gemäß der DE 10 2017 202 910 A1 ausgebildet sein, auf welche hiermit Bezug genommen wird.

In beiden Leitungen 7 und 8 ist jeweils ein Adapter 7a bzw. 8a vorgesehen, an welchem die jeweilige Leitung getrennt und zusammengefügt werden kann. An dieser Stelle können Fehler bzw. Störungen auftreten, d.h. es können Verwechslungen zwischen den Leitungen 7 und 8 oder auch mit weiteren Leitungen geschehen. Solche Fehler bzw. Störungen sind erfindungsgemäß zu erkennen.

Die Leitung 7 umfasst eine Pumpe 9, insbesondere eine Zulaufpumpe, und die Leitung 8 eine Pumpe 10, insbesondere eine Rücklaufpumpe. Beide Pumpen werden elektrisch betrieben und können hinsichtlich ihrer Pumpleistung gesteuert werden. Die Pumpe 7 kann bevorzugt Drücke bis 10 bar erzeugen. Sofern die Pumpe aktiv ist und die Leitung 7 nicht frei ist (geschlossenes Ventil, geknickter Leitungsschlauch, etc.), kann es zu störenden Überdruck kommen. Im Normalbetrieb ist die Leitung jedoch frei und Störungen treten daher durch fehlerhafte Komponenten oder Fehlbedienungen oder Montagefehler auf.

Wenigstens in der Leitung 7 ist ein Ventil 11 vorhanden, bevorzugt auch ein weiteres Ventil 12 in der Leitung 8. Über das Ventil ist die jeweilige Leitung zu öffnen oder zu schließen.

In der Leitung 7 sind weitere Komponenten vorhanden, z.B. ein (Druck-) Dämpfer 13, ein (Tinten-) Entgaser 14, ein (Tinten-) Heizer 15 und/oder ein (Tinten-) Filter 16.

Die Ventile 11 und 12 sowie die Komponenten 13 bis 16 und gegebenenfalls weitere Komponenten können Fehler bzw. Störungen aufweisen. Auch solche Fehler bzw. Störungen sind erfindungsgemäß zu erkennen.

Zur Durchführung des erfindungsgemäßen Verfahrens ist wenigstens ein Drucksensor 17 vorgesehen bzw. wird bereitgestellt. Der Drucksensor ist bevorzugt in der Leitung 7 oder an der Leitung vorgesehen, d.h. er ermöglicht das Messen des Drucks in der flüssigen Tinte am Messort des Drucksensors. Bevorzugt ist der Drucksensor nahe beim Tintendruckkopf 3 vorgesehen, besonders bevorzugt in Tintenflussrichtung direkt vor dem Tintendruckkopf.

Erfindungsgemäß ist der Drucksensor 17 beabstandet zur Pumpe 9 angeordnet bzw. bereitgestellt. Dieser Abstand erlaubt es insbesondere, die Ventile 11 und 12 und die Komponenten 13 bis 16 (und mögliche weitere Komponenten) zwischen der Pumpe 9 und dem Drucksensor 17 anzuordnen bzw. bereitzustellen.

Die Einrichtung 2 kann optional auch einen weiteren Drucksensor 18, bevorzugt in der Leitung 8, umfassen. Druckmessungen können in diesem Fall auch am Messort des weiteren Drucksensors erfolgen, z.B. in Tintenflussrichtung direkt nach dem Tintendruckkopf 3. Aufgrund des Abstands der beiden Tintendrucksensoren zueinander, messen die beiden Sensoren einen durch die Leitungen 7 und 8 laufenden Druckpuls in der flüssigen Tinte zu verschiedenen Zeiten, d.h. es besteht eine Zeitdifferenz $\Delta t$.

Figur 1 lässt erkennen, dass in Leitung 7 und/oder Leitung 8 jeweils ein (Tinten-) Leck 19 bzw. eine entsprechende Leckage vorhanden sein kann. Beispielsweise können Schläuche oder Rohre der Leitung oder deren Verbindungsstellen undicht sein. Auch solche Fehler bzw. Störungen sind erfindungsgemäß zu erkennen.

Die Einrichtung 2 umfasst noch einen digitalen Rechner 20 mit einem digitalen Speicher 21. Der Rechner erhält über Verbindungen 22 Signale und/oder Daten von dem Sensor 17 (oder von den beiden Sensoren 17 und 18) und gibt Steuersignale und/oder Steuerdaten über Verbindungen 23 an die Pumpe 9 und/oder an die Pumpe 10. Die Verbindungen 22 und 23 können drahtgebunden oder drahtlos sein.

Erfindungsgemäß wird mittels der Pumpe 9 ein Druckpuls 24 in der flüssigen Tinte erzeugt. Die Art des Druckpulses (z.B. seine Intensität, Höhe, Dauer und/oder Form) kann bevorzugt vorgegeben, z.B. im Speicher 21, abgelegt sein. Der Druckpuls kann z.B. ein Rechteckpuls sein. Es können entsprechend auch weitere - gleiche oder verschiedene - Druckpulse 24a erzeugt werden.

Der Druckpuls 24 läuft über die Leitung 7 und kann dabei von dem Ventil 11 und den Komponenten 13 bis 16 (und gegebenenfalls von weiteren Komponenten) beeinflusst werden. Entsprechendes gilt für die gegebenenfalls erzeugten weiteren Druckpulse 24a. Die Beeinflussung des Druckpulses hängt demnach davon ab, welches Bauteil (Ventil und/oder Komponente) tatsächlich vorhanden ist. Die Art der Beeinflussung des Druckpulses 24 kann von dem Bauteil und seiner ordnungsgemäßen oder fehlerhaften bzw. gestörten Funktion abhängen. Entsprechendes gilt für die Druckpulse 24a.

Der beeinflusste Druckpuls 25 (und gegebenenfalls weitere beeinflusste Druckpulse 25a) läuft über die Leitung 7 weiter wenigstens bis zum Drucksensor 17, welcher den beeinflussten Druckpuls messtechnisch erfasst bzw. ein Messergebnis 26 (und gegebenenfalls weitere Messergebnisse 26a) erzeugt. Das Messergebnis gelangt über die Verbindung 22 zum Rechner. Entsprechendes gilt für weitere Messergebnisse 26a für den Fall, dass weitere Druckpulse 24a erzeugt werden.

Der digitale Rechner 20 ist derart ausgelegt, bzw. arbeitet mit einem entsprechend bereitgestellten digitalen Programm, dass das Messergebnis 26 (und gegebenenfalls auch die weiteren Messergebnisse 26a) ausgewertet werden können. Im Zuge der Auswertung kann das Vorhandensein und/oder die Art einer Störung ermittelt werden, z.B. einer Leckage, eines geschlossenen Ventils oder einer defekten Komponente.

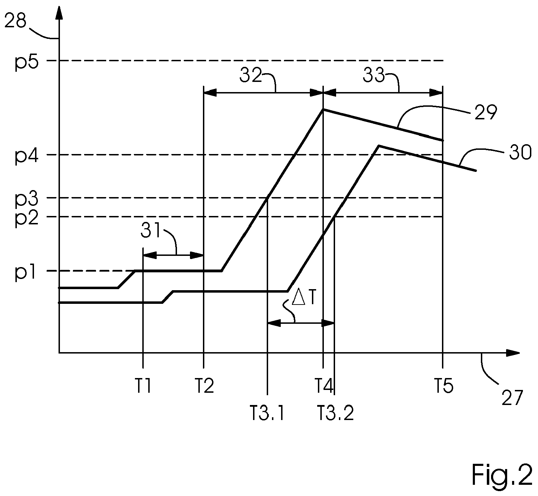

Figur 2 zeigt ein Zeit/Druck-Diagramm mit einer Zeitachse 27 und einer Druckachse 28. Das Diagramm stellt zwei Messkurven dar: eine Kurve 29 der Messergebnisse 26 des Drucksensors 17 und eine Kurve 30 der Messergebnisse 26 des weiteren Drucksensors 18.

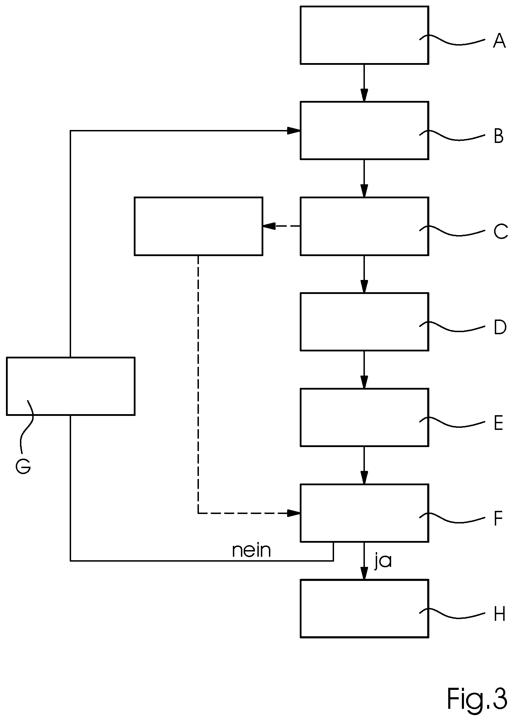

In dem Diagramm sind drei Phasen (Zeitspannen) erkennbar: eine erste Phase 31, eine zweite Phase 32 und eine dritte Phase 33. Weiterhin Zeitpunkte T1, T2, T3.1, T3.2, T4 und T5 und Drücke p1 bis p5. Schließlich noch die Zeitdifferenz $\Delta t$. Eine Erklärung des Diagramms findet sich im Folgenden im Zusammenhang mit der Beschreibung von Figur 3.

In Figur 3 ist schematisch der Ablauf einer bevorzugten Ausführungsform des erfindungsgemäßen Verfahrens mit den Verfahrensschritten A bis H dargestellt.

Schritt A: Bereitstellen der Pumpen 9 und/oder 10, der Drucksensoren 17 und/oder 18, der Leitungen 7 und 8 sowie des Rechners 20 und bevorzugt des Speichers 21.

Schritt B: Start der Testprozedur
Vor bevorzugt jedem Start der Pumpe 9 findet eine Testprozedur statt, die man in 3 Phasen einteilen kann. Nur wenn die Phasen korrekt verlaufen sind, ist die Einrichtung 2 in Ordnung. In den drei Phasen können die Fehler des Systems erkannt werden. Der gesamte Test dauert etwa 10 Sekunden.

Schritt C: Phase 1 - Ermitteln des Referenzdrucks
Der Pfad des fluidischen Systems bzw. die Leitung 7 wird zwischen Pumpe 9 (Signalsender) und Drucksensor 17 verbunden. Dies geschieht z.B. durch Schalten des Ventils 11. Dadurch geschieht ein Druckausgleich zwischen Pumpe und Drucksensor. Die Phase 1 beginnt zum Zeitpunkt T1. Am Ende der Phase 1 wird der dann gemessene Druck bzw. der Messwert 26 als Referenzdruck definiert und im Speicher 21 hinterlegt.

Schritt D: Phase 2 - Erzeugen des Druckpulses und Messen des Druckanstiegs
Die Phase 2 beginnt zum Zeitpunkt T2. Die Pumpe 9 wird für etwa 100 Millisekunden aktiviert um einen Druckpuls 24 zu generieren. Nach einer Laufzeit erzeugt der Puls einen Druckanstieg am Drucksensor 17. Der Druckanstieg geschieht je nach Zustand des Mediums monoton stetig (oder anders). Phase 2 endet zum Zeitpunkt T3 mit dem absoluten Maximum des Drucks.

Schritt E: Phase 3 - Messen des Druckabfalls
Nachdem das absolute Maximum erreicht worden ist, nimmt der Druck in der Tinte wieder ab. Bei einem System ohne Leck ist die Abnahme allerdings äußerst gering. Nach einer Wartezeit endet die Phase 3 zum Zeitpunkt T4. Parallel zur Messung der Drucksignale 26 am Drucksensor 17 (Schritte D und E) können auch weitere Signale am weiteren Drucksensor 18 gemessen werden. Hier finden analog die Phasen 1 bis 3 statt. Da der weitere Drucksensor etwas mehr von der Pumpe entfernt ist, ist das weitere Signal in der Regel etwas - um $\Delta t$ - verzögert. Das weitere Signal auch einen anderen Absolutdruck wegen der unterschiedlichen geodätischen Höhen an den Drucksensoren besitzen.

Schritt F: Rechnergestützes Auswerten der Messergebnisse
Auswertung des Signals:
Die obige Beschreibung der Phasen 1 bis 3 beschreibt den Fall eines korrekten fluidischen Systems. Das System ist z.B. in folgenden Fällen a bis e korrekt:

a. Der Referenzdruck $p_{Ref}$ ist kleiner als ein maximaler Referenzdruck $p_{Refmax}$ (z.B. 50 mbar)

b. Das Drucksignal 26 überschreitet eine vorgegebene Schwelle S. Die Schwelle S wird zum Referenzdruck addiert. Sabs = S + $p_{Ref}$
Beispiel:

Referenzdruck $p_{Ref}$ = 5 mbar;
Schwellenwert S=10 mbar;

$$S_{abs} = S + p_{Ref} = 10 \text{ mbar} + 3 \text{ mbar} = 13 \text{ mbar}.$$

c. Das Drucksignal 26 erreicht (monoton steigend) ein Maximum (z.B. 18 mbar).
Falls ein Druckkopf an der Leitung angeschlossen ist, würde dieser noch nicht lecken, da die Leckgrenze sich oberhalb von 18 mbar befindet.

d. Das Drucksignal 26 fällt in der Phase 3 nur gering ab (z.B. < 1 mbar /min), andernfalls besteht ein Leck.

e. Die Zeitdifferenz $\Delta t$ = T3.2- T3.1 ist positiv, andernfalls wären die Leitungen 7 und 8 (z.B. an der Adaptern 7a und 8a) vertauscht.

Am Ende von Schritt F wird rechnergestützt entschieden, ob die Einrichtung 2 störungsfrei ist oder nicht.

Schritt G: Durchführen ergebnisabhängiger Maßnahmen, z.B. ausgeben einer Warnung und/oder Anzeigen der Messergebnisse und/oder der ermittelten Fehler bzw. Störungen. Es kann eine neue Testprozedur gestartet werden.

Schritt H: Die Einrichtung 2 zur Tintenversorgung ist störungsfrei, so dass mit dem Drucken begonnen werden kann.

Erfindungsgemäß kann ein zeitlicher Verlauf des Messergebnisses 26, insbesondere dessen Gradienten, rechnergestützt ausgewertet werden, wobei folgende Ergebnisse für das fluidische System bzw. das Fluid in der Leitung 7 und/oder 8 erzielt werden können:

a. Positiver hoher Gradient mit nachfolgenden geringen Gradienten: fluidisches System umfasst eine Flüssigkeit;
b. Wendepunkte im Gradienten: fluidisches System umfasst ein Gemisch aus Flüssigkeit und Luft;
c. Positiver Gradient mit nachfolgenden geringen Gradienten: fluidisches System umfasst Luft; und
d. Positiver Gradient und nachfolgend negativer Gradient: fluidisches System weist ein Leck auf.

Die Messung des Drucksignals 26 kann auch eine Relativmessung sein: Der Pfad der Leitung 7 und/oder 8 wird vor dem Aussenden des Druckpulses 24 zu den Drucksensoren 17 und/oder 18 geöffnet (Ventile 11 und/oder 12 schalten auf "geöffnet"). Nach einer Druckausgleichszeit wird ein Referenzdruck bestimmt. Alle anderen, späteren Druckmesswerte werden auf diesen Referenzdruck bezogen.

**Bezugszeichenliste**

| | |
|---|---|
| 1 | Tintendruckmaschine |
| 2 | Einrichtung für Tintenversorgung |
| 3 | Tintendruckkopf |
| 4 | Tintentropfen |
| 5 | Tintenvorratsbehälter |
| 6 | Tinte |
| 7 | Tintenzulaufleitung |
| 7a | Adapter |
| 8 | Tintenrücklaufleitung |
| 8a | Adapter |
| 9 | Zulaufpumpe |
| 10 | Rücklaufpumpe |
| 11 | Ventil |
| 12 | Ventil |
| 13 | Dämpfer |
| 14 | Entgaser |
| 15 | Heizer |
| 16 | Filter |
| 17 | Drucksensor |
| 18 | weiterer Drucksensor |
| 19 | Leck/Leckage |
| 20 | digitaler Rechner |
| 21 | digitaler Speicher |
| 22 | Verbindungen (Sensor zu Rechner) |
| 23 | Verbindungen (Rechner zur Pumpe) |
| 24 | erzeugter Druckpuls |
| 24a | weiterer erzeugter Druckpuls |
| 25 | beeinflusster Druckpuls |
| 25a | weiterer beeinflusster Druckpuls |
| 26 | Messergebnis |
| 26a | weiteres Messergebnis |
| 27 | Zeitachse |
| 28 | Druckachse |
| 29 | Kurve: Messergebnisse des Sensors |
| 30 | Kurve: Messergebnisse des weiteren Sensors |
| 31 | erste Phase |

32     zweite Phase

33     dritte Phase

T1 bis T5    Zeitpunkte

Δt          Zeitdifferenz

pl-p5      Drücke

A-H       Verfahrensschritte

**Patentansprüche**

1. Verfahren zur Überprüfung einer Leitung für Tinte einer Tintendruckmaschine auf eine Störung, wobei eine Pumpe (9) für die Tinte derart angesteuert wird, dass die Pumpe einen Druckpuls (24) in der Tinte erzeugt, der Druckpuls durch die Leitung (7) läuft und dabei störungsabhängig beeinflusst wird, der beeinflusste Druckpuls (25) zu einem von der Pumpe beabstandeten Drucksensor (17, 18) gelangt, der Drucksensor ein vom beeinflussten Druckpuls abhängiges Messergebnis (26, D, E) erzeugt und dieses an einen Rechner (20) übermittelt und der Rechner das Messergebnis auswertet (F) und dadurch das Vorhandensein der Störung oder das Vorhandensein und die Art der Störung ermittelt.

2. Verfahren nach Anspruch 1,
**dadurch gekennzeichnet,**
**dass** der Druckpuls (24) ein vorgegebener Druckpuls (24) ist.

3. Verfahren nach Anspruch 2,
**dadurch gekennzeichnet,**
**dass** der vorgegebene Druckpuls (24) in einem digitalen Speicher (21) abgelegt ist.

4. Verfahren nach einem der vorhergehenden Ansprüche,
**dadurch gekennzeichnet,**
**dass** der Druckpuls (24) durch Steuerung der Pumpenleistung, insbesondere der Drehzahl und/oder der Pumpendauer der Pumpe (9) erzeugt wird.

5. Verfahren nach einem der vorhergehenden Ansprüche,
**dadurch gekennzeichnet,**
**dass** der Druckpuls (24) derart bemessen ist, dass ein unbeabsichtigtes Austreten von Tinte an einem Tintendruckkopf (3) der Tintendruckmaschine (1) verhindert wird.

6. Verfahren nach einem der vorhergehenden Ansprüche,
**dadurch gekennzeichnet,**
**dass** ein weiterer Druckpuls (24a) erzeugt wird, sofern der Druckpuls (24) einen vorgegebenen Mindestdruck nicht erreicht.

7. Verfahren nach Anspruch 6,
**dadurch gekennzeichnet,**
**dass** der weitere Druckpuls (24a) intensiver als der Druckpuls (24) ist, insbesondere schneller ansteigt und/oder höher ansteigt und/oder länger andauert.

8. Verfahren nach einem der Ansprüche 6 oder 7,
**dadurch gekennzeichnet,**
**dass** mehrere weitere Druckpulse (24a) erzeugt werden, wobei deren Anzahl auf einen vorgegebenen Wert begrenzt ist.

9. Verfahren nach einem der vorhergehenden Ansprüche,
**dadurch gekennzeichnet,**
**dass** ein weiterer, von der Pumpe (9) beabstandeter Drucksensor (18) bereitgestellt wird und dass rechnergestützt (20) eine Zeitdifferenz (Δt) des Messergebnisses (26) des Drucksensors (17) und eines weiteren Messergebnisses (26a) des weiteren Drucksensors (18) ermittelt und ausgewertet wird.

**10.** Verfahren nach einem der vorhergehenden Ansprüche,
**dadurch gekennzeichnet,**
**dass** rechnergestützt (20) ein zeitlicher Verlauf (29, 30) des Messergebnisses (26), insbesondere dessen Gradient, ausgewertet wird.

**11.** Verfahren nach einem der vorhergehenden Ansprüche,
**dadurch gekennzeichnet,**
**dass** rechnergestützt (20) ermittelt wird, ob eine der folgenden Störungen vorliegt:
Leckage der Leitung, Anschlussfehler der Leitung, Schaltfehler eines Ventils, fehlerhafte Komponente, insbesondere fehlerhafter Dämpfer, Entgaser, Heizer oder Filter.

Fig.1

Fig.2

Fig.3

**Europäisches Patentamt**
**European Patent Office**
**Office européen des brevets**

# EUROPÄISCHER RECHERCHENBERICHT

**Nummer der Anmeldung**

EP 19 16 8067

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/076884 A1 (HEWLETT PACKARD DEVELOPMENT CO [US]) 19. Mai 2016 (2016-05-19) * Absätze [0012], [0016], [0021] - [0023], [0031], [0046] - [0048]; Abbildungen 1-7 * | 1-11 | INV. B41J2/175 B41J29/393 G01M3/28 |
| X | US 2018/010599 A1 (HERNANDEZ MARTINEZ BHISHMA [ES] ET AL) 11. Januar 2018 (2018-01-11) * Absätze [0023], [0051]; Abbildungen 1-8 * | 1-11 | |
| X | EP 2 891 558 A1 (FUJIFILM CORP [JP]) 8. Juli 2015 (2015-07-08) * Absatz [00179]; Abbildungen 1-15 * | 1-11 | |
| X | US 2003/214412 A1 (HO CHEN [US] ET AL) 20. November 2003 (2003-11-20) * Absätze [0002], [0038]; Ansprüche 1, 2, 4 * | 1-11 | |

| RECHERCHIERTE SACHGEBIETE (IPC) |
|---|
| B41J G01M |

Der vorliegende Recherchenbericht wurde für alle Patentansprüche erstellt

| Recherchenort | Abschlußdatum der Recherche | Prüfer |
|---|---|---|
| Den Haag | 11. September 2019 | Cavia Del Olmo, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 19 16 8067

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-09-2019

| Im Recherchenbericht angeführtes Patentdokument | Datum der Veröffentlichung | Mitglied(er) der Patentfamilie | Datum der Veröffentlichung |
|---|---|---|---|
| WO 2016076884 A1 | 19-05-2016 | BR 112017008683 A2 | 28-08-2018 |
| | | CN 107073964 A | 18-08-2017 |
| | | EP 3218192 A1 | 20-09-2017 |
| | | JP 6386669 B2 | 05-09-2018 |
| | | JP 2017535451 A | 30-11-2017 |
| | | KR 20170084051 A | 19-07-2017 |
| | | US 2017313095 A1 | 02-11-2017 |
| | | WO 2016076884 A1 | 19-05-2016 |
| US 2018010599 A1 | 11-01-2018 | US 2018010599 A1 | 11-01-2018 |
| | | WO 2016119859 A1 | 04-08-2016 |
| EP 2891558 A1 | 08-07-2015 | EP 2891558 A1 | 08-07-2015 |
| | | JP 5886164 B2 | 16-03-2016 |
| | | JP 2014046577 A | 17-03-2014 |
| | | US 2015174897 A1 | 25-06-2015 |
| | | WO 2014034711 A1 | 06-03-2014 |
| US 2003214412 A1 | 20-11-2003 | AU 2003223441 A1 | 12-12-2003 |
| | | US 2003214412 A1 | 20-11-2003 |
| | | WO 03100742 A1 | 04-12-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5439355 A
- DE 102009048690 A1
- DE 102017202910 A1